# EUROPEAN PATENT APPLICATION

(11) **EP 3 771 641 A1**
(43) Date of publication of application: **03.02.2021**
(21) Application number: 19216136.2
(22) Date of filing: 13.12.2019
(51) Int. Cl.: B64D 11/04, F16K 11/072, F16K 11/085, F16K 11/076

(54) **FOUR-WAY ROTARY VALVE FOR AN AIRCRAFT GALLEY PLUMBING SYSTEM**

(30) Priority: 30.07.2019 US 201916526553
(71) Applicant: BE AEROSPACE, INC., North Carolina 27105 (US)
(72) Inventor: BURD, Peter J.L., Burry Port, South Wales SA 16 0RB (GB); PEARCE, Nicholas J.W., Mukilteo, WA Washington 98275 (US)
(74) Representative: Dehns

(57) **Abstract**

A four-way rotary valve (102) includes a valve body and a rotor (202) housed within a cavity (204) defined by one or more interior surfaces of the valve body. The valve body includes a plurality of valve ports in fluid communication with the cavity. Each valve port of the plurality of valve ports is in fluid communication with a potable water sub-system or a waste water sub-system. The rotor includes an axle. The rotor includes a plurality of arms. Adjacent arms of the plurality of arms are coupled to the axle at a select offset angle. The rotor includes a plurality of blades. Each blade of the plurality of blades is coupled to an arm of the plurality of arms. The rotor is positionable in a plurality of positions configured to direct fluid flow into at least one of the potable water sub-system or the waste water sub-system.

## Description

### BACKGROUND

An aircraft galley plumbing system may include potable water and waste water sub-systems. The sub-systems may be in fluid communication with and/or proximate to valves, faucets and drains, galley inserts and galley installations, or other components within an aircraft galley. The size of the aircraft galley may dictate the arrangement and compactness of the aircraft galley plumbing system.

### SUMMARY

A four-way rotary valve is disclosed. In one or more embodiments, the four-way rotary valve includes a valve body. The valve body includes a cavity defined by one or more interior surfaces of the valve body. The valve body includes a plurality of valve ports in fluid communication with the cavity. Each valve port of the plurality of valve ports is in fluid communication with a component of a potable water sub-system of an aircraft galley plumbing system or a component of a waste water sub-system of the aircraft galley plumbing system. The four-way rotary valve includes a rotor housed within the cavity. The rotor includes an axle. The rotor includes a plurality of arms. Adjacent arms of the plurality of arms are coupled to the axle at a select offset angle. The rotor includes a plurality of blades. Each blade of the plurality of blades is coupled to an arm of the plurality of arms. Each blade of the plurality of blades includes a select arc length. The rotor is positionable in a plurality of positions. Each position of the plurality of positions is configured to direct fluid flow into at least one of the potable water sub-system of the aircraft galley plumbing system or the waste water sub-system of the aircraft galley plumbing system.

In some embodiments of the four-way rotary valve, the plurality of arms includes two arms. The plurality of blades includes two blades. Each blade of the two blades is coupled to an arm of the two arms. An arc length of a first blade of the two blades is longer than an arc length of a second blade of the two blades.

In some embodiments of the four-way rotary valve, the four-way rotary valve further includes an external lever coupled to the rotor. The external lever is configured to operate the rotor. The external lever is configured to couple to the rotor via an opening in at least one of a front valve cover or a rear valve cover.

In some embodiments of the four-way rotary valve, the four-way rotary valve further includes a motor communicatively coupled to a controller. The controller is configured to drive the motor. The motor is configured to cause a rotation of the external lever.

In some embodiments of the four-way rotary valve, the plurality of valve ports include a water filter drain valve port, a first manifold valve port, a second manifold valve port, and a drainage discharge valve port.

In some embodiments of the four-way rotary valve, the plurality of positions includes a fill position. The water filter drain valve port and the drainage discharge valve port are closed. The first manifold valve port and the second manifold valve port are open. A plurality of potable water supply lines of the potable water sub-system is selectively filled via the first manifold valve port and the second manifold valve port while at least one additional component of the potable water sub-system or the waste water sub-system remains pressurized.

In some embodiments of the four-way rotary valve, the plurality of positions includes a manifold drain position. The water filter drain valve port is closed. The first manifold valve port, the second manifold valve port, and the drainage discharge valve port are open. At least one of a plurality of potable water supply lines of the potable water sub-system or at least one galley insert in fluid communication with the plurality of potable water supply lines are selectively drained into a waste water sump via the first manifold valve port, the second manifold valve port, and the drainage discharge valve port while at least one additional component of the potable water sub-system or the waste water sub-system remains pressurized.

In some embodiments of the four-way rotary valve, the plurality of positions includes a full drain position. The water filter drain valve port, the first manifold valve port, the second manifold valve port, and the drainage discharge valve port are open. At least one of a plurality of potable water supply lines, at least one galley insert in fluid communication with the plurality of potable water supply lines, a potable water filter of the potable water sub-system, or a plurality of potable water filter lines in fluid communication with the potable water filter are selectively drained into a waste water sump via the water filter drain valve port, the first manifold valve port, the second manifold valve port, and the drainage discharge valve port while at least one additional component of the potable water sub-system or the waste water sub-system remains pressurized.

In some embodiments of the four-way rotary valve, the plurality of positions includes a water filter drain position. The first manifold valve port and the second manifold valve port are closed. The water filter drain valve port and the drainage discharge valve port are open. At least one of a potable water filter of the potable water sub-system or a plurality of potable water filter lines in fluid communication with the potable water filter are selectively drained into a waste water sump via the water filter drain valve port and the drainage discharge valve port while at least one additional component of the potable water sub-system or the waste water sub-system remains pressurized.

In some embodiments of the four-way rotary valve, the valve body further includes a plurality of valve channels. Each valve channel of the plurality of valve channels is in fluid communication with a valve port of the plurality of valve ports. Each valve channel of the plurality of valve channels is in fluid communication with the cavity.

A four-way rotary valve is disclosed. In one or more embodiments, the four-way rotary valve includes a valve body. The valve body includes a cavity defined by one or more interior surfaces of the valve body. The valve body includes a plurality of valve ports in fluid communication with the cavity. Each valve port of the plurality of valve ports is in fluid communication with a component of a potable water sub-system of an aircraft galley plumbing system or a component of a waste water sub-system of the aircraft galley plumbing system. The four-way rotary valve includes a rotor housed within the cavity. The rotor includes an axle. The rotor includes two arms coupled to the axle at a select offset angle. The rotor includes two blades. Each blade of the two blades are coupled to an arm of the two arms. An arc length of a first blade of the two blades is longer than an arc length of a second blade of the two blades. The rotor is positionable in a plurality of positions. Each position of the plurality of positions is configured to direct fluid flow into at least one of the potable water sub-system of the aircraft galley plumbing system or the waste water sub-system of the aircraft galley plumbing system.

In some embodiments of the four-way rotary valve, a position of the plurality of positions being configured to selectively fill the potable water sub-system while at least one additional component of the potable water sub-system or the waste water sub-system remains pressurized.

In some embodiments of the four-way rotary valve, a position of the plurality of positions being configured to selectively drain a potable water filter of the potable water sub-system via the waste water sub-system potable water sub-system while at least one additional component of the potable water sub-system or the waste water sub-system remains pressurized.

In some embodiments of the four-way rotary valve, a position of the plurality of positions being configured to selectively drain at least one galley insert in fluid communication with a component of the potable water sub-system via the waste water sub-system potable water sub-system while at least one additional component of the potable water sub-system or the waste water sub-system remains pressurized.

An aircraft galley plumbing system is disclosed. In one or more embodiments, the aircraft galley plumbing system includes a potable water sub-system. The aircraft galley plumbing system further includes a waste water sub-system. The aircraft galley plumbing system further includes a four-way rotary valve. The four-way rotary valve includes a valve body. The valve body includes a cavity defined by one or more interior surfaces of the valve body. The valve body includes a plurality of valve ports in fluid communication with the cavity. Each valve port of the plurality of valve ports is in fluid communication with a component of the potable water sub-system of an aircraft galley plumbing system or a component of the waste water sub-system of the aircraft galley plumbing system. The four-way rotary valve includes a rotor housed within the cavity. The rotor includes an axle. The rotor includes a plurality of arms. Adjacent arms of the plurality of arms are coupled to the axle at a select offset angle. The rotor includes a plurality of blades. Each blade of the plurality of blades is coupled to an arm of the plurality of arms. Each blade of the plurality of blades includes a select arc length. The rotor is positionable in a plurality of positions. Each position of the plurality of positions is configured to direct fluid flow into at least one of the potable water sub-system of the aircraft galley plumbing system or the waste water sub-system of the aircraft galley plumbing system.

In some embodiments of the aircraft galley plumbing system, the aircraft galley plumbing system further includes one or more secondary valves. The four-way rotary valve and the one or more secondary valves are interlinked to synchronize at least one of an opening sequence or a closing sequence for the four-way rotary valve and the one or more secondary valves.

In some embodiments of the aircraft galley plumbing system, the potable water sub-system includes a plurality of potable water supply lines. A potable water supply line of the plurality of potable water supply lines is configured to provide potable water from a potable water source to at least one galley insert. The potable water sub-system further includes a potable water filter. The potable water filter is in fluid communication with the potable water source via a potable water source line. The potable waterfilter is in fluid communication with the four-way rotary valve via a dedicated filter line. The potable water sub-system further includes a faucet. The faucet is in fluid communication with a potable water supply line of the plurality of potable water supply lines via a faucet supply line. At least some potable water supply lines of the plurality of potable water supply lines are arranged in a supply line loop configured to prevent backflow of potable water into the faucet supply line of the faucet.

In some embodiments of the aircraft galley plumbing system, the waste water sub-system includes a plurality of drain lines. A drain line of the plurality of drain lines is configured to receive waste water from at least one galley insert. The waste water sub-system further includes a plurality of waste water sumps. A waste water sump of the plurality of waste water sumps is configured to receive waste water from a drain line of the plurality of drain lines. The waste water sub-system further includes a main drain line in fluid communication with at least one of a drain line of the plurality of drain lines or a waste water sump of the plurality of waste water sumps. At least some of the plurality of drain lines, the plurality of waste water sumps, or the main drain line are configured to prevent waste water backflow into the waste water sub-system.

In some embodiments of the aircraft galley plumbing system, the waste water sub-system further includes a compact drain strainer configured to receive waste water from the main drain line. The compact drain strainer is configured to at least one of filter waste water or prevent waste water backflow into the waste water sub-system.

In some embodiments of the aircraft galley plumbing system, the aircraft galley plumbing system further includes a service wall. One or more components of the potable water sub-system, one or more components of the waste water sub-system, and the four-way rotary valve are coupled to the service wall. The potable water sub-system, the waste water sub-system, the four-way rotary valve, and the service wall are configured to be installed as a single aircraft galley plumbing unit within an aircraft galley of an aircraft.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a view from a working face of an aircraft galley plumbing system with a four-way rotary valve, in accordance with one or more embodiments of the present disclosure;
FIG. 2A illustrates a cross-section of a view toward a front face of a four-way rotary valve of an aircraft galley plumbing system, in accordance with one or more embodiments of the present disclosure;
FIG. 2B illustrates a view toward a front face of a four-way rotary valve of an aircraft galley plumbing system, in accordance with one or more embodiments of the present disclosure;
FIG. 2C illustrates a view toward a rear face of a four-way rotary valve of an aircraft galley plumbing system, in accordance with one or more embodiments of the present disclosure;
FIG. 3A illustrates a view toward a front face of a rotor of a four-way rotary valve of an aircraft galley plumbing system, in accordance with one or more embodiments of the present disclosure;
FIG. 3B illustrates a view toward a side face of a rotor of a four-way rotary valve of an aircraft galley plumbing system, in accordance with one or more embodiments of the present disclosure;
FIG. 3C illustrates a view toward a side face of a four-way rotary valve of an aircraft galley plumbing system, in accordance with one or more embodiments of the present disclosure;
FIG. 4A illustrates a view toward a front face of a four-way rotary valve of an aircraft galley plumbing system, in accordance with one or more embodiments of the present disclosure;
FIG. 4B illustrates a view toward a front face of a four-way rotary valve of an aircraft galley plumbing system, in accordance with one or more embodiments of the present disclosure;
FIG. 4C illustrates a view toward a front face of a four-way rotary valve of an aircraft galley plumbing system, in accordance with one or more embodiments of the present disclosure;
FIG. 4D illustrates a view toward a front face of a four-way rotary valve of an aircraft galley plumbing system, in accordance with one or more embodiments of the present disclosure;
FIG. 5 illustrates a view toward a front face of a four-way rotary valve of an aircraft galley plumbing system, in accordance with one or more embodiments of the present disclosure; and
FIG. 6 is a block diagram illustrating a system including an aircraft housing an aircraft galley plumbing system, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

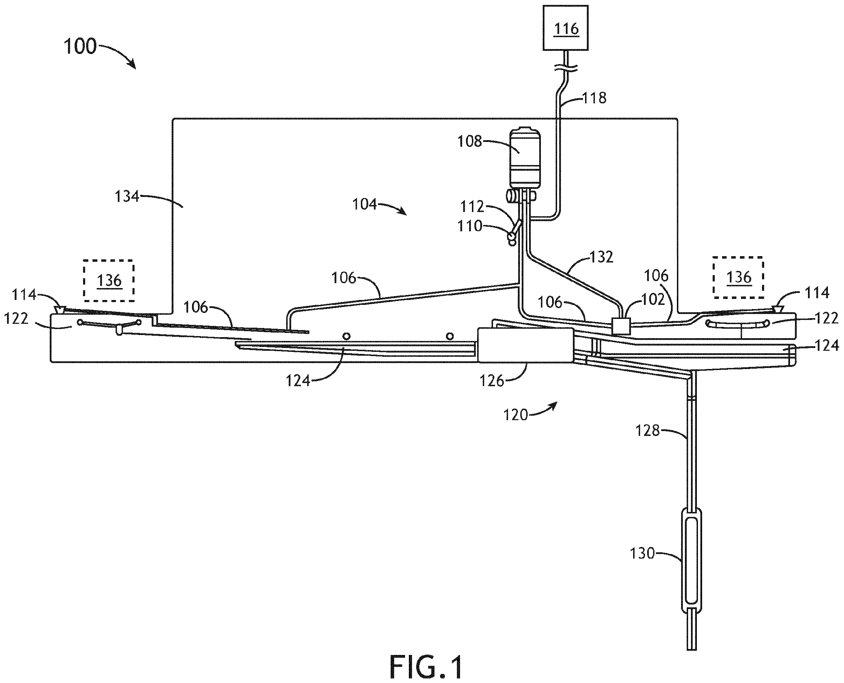

FIGS. 1-6 generally illustrate an aircraft galley plumbing system 100 including a four-way (e.g., "cruciform") rotary valve 102. It is noted herein that "aircraft galley plumbing system 100" and "galley plumbing system 100" may be considered equivalent, for purposes of the present disclosure. In addition, it is noted herein that "four-way rotary valve 102" and "rotary valve 102" may be considered equivalent, for purposes of the present disclosure.

FIG. 1 illustrates the aircraft galley plumbing system 100, in accordance with one or more embodiments of the present disclosure.

The aircraft galley plumbing system 100 may include a potable water sub-system (or manifold) 104. The potable water sub-system 104 may include one or more potable water supply lines 106. The one or more potable water supply lines 106 may be in fluid communication with and/or proximate to one or more components in fluid communication with and/or proximate to the potable water sub-system 104. For example, the one or more components in fluid communication with and/or proximate to the potable water sub-system 104 may include, but are not limited to, one or more galley inserts or installations 136 (e.g., beverage makers, refrigerators, chillers, freezers, dishwashers, ovens, or the like), one or more drip trays of the one or more galley inserts or installations 136, or the like.

At least some of the one or more potable water supply lines 106 may be in fluid communication with the four-way rotary valve 102, such that the potable water sub-system 104 may be configured to fill via the four-way rotary valve 102 when the four-way rotary valve 102 is in a select operational configuration.

At least some of the one or more potable water supply lines 106 may be in fluid communication with one or more potable water filters 108.

At least some of the one or more potable water supply lines 106 may be in fluid communication with one or more faucets 110, where the one or more faucets 110 are fed by one or more faucet supply lines 112 in fluid communication with the at least some of the one or more potable water supply lines 106. At least some of the one or more potable water supply lines 106 may be arranged in a supply line loop configured to prevent backflow of discharged water of a select temperature (e.g., heated or hot water, cooled or cold water, or the like) from reaching the one or more faucets 110 via the one or more faucet supply lines 112. In this regard, crew members operating within the aircraft galley may be protected from faucet 110 discharge at an unexpected temperature.

At least some of the one or more potable water supply lines 106 may be in fluid communication with one or more vent valves 114.

Some combination of the one or more potable water filters 108, the one or more faucets 110, and/or the one or more vent valves 114 may be configured to open and close and ensure a complete filling of the aircraft galley plumbing system 100. For example, the one or more potable water filters 108, the one or more faucets 110, and/or the one or more vent valves 114 may be configured as self-venting components of the aircraft galley plumbing system 100. By way of another example, the one or more potable water filters 108, the one or more faucets 110, and/or the one or more vent valves 114 may be configured as manually-controlled or electrically-controlled components of the aircraft galley plumbing system 100 (e.g., are conventional components of the aircraft galley plumbing system 100).

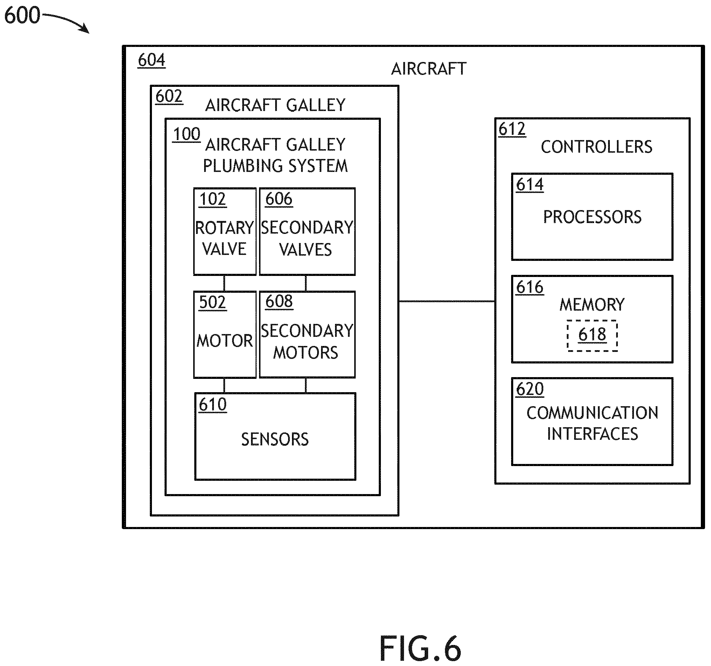

One or more sub-systems of the aircraft galley plumbing system 100 (e.g., the potable water sub-system 104) may be filled and/or drained from one or more potable water sources 116. For example, the potable water source 116 may be a potable water tank that is integrated within the system 100. By way of another example, the potable water source 116 may be separate from the system 100 and located within a ceiling, behind a side wall, underneath a floor, or positioned elsewhere within the aircraft galley (e.g., an aircraft galley 602, as illustrated in FIG. 6).

The one or more potable water sources 116 may be in fluid communication with one or components of the one or more sub-systems of the aircraft galley plumbing system 100 via one or more potable water source lines 118. For example, the one or more potable water sources 116 may be in fluid communication with the four-way rotary valve 102 via the one or more potable water source lines 118. By way of another example, the one or more potable water sources 116 may be in fluid communication with the one or more water filters 108 via the one or more potable water source lines 118.

The aircraft galley plumbing system 100 may include a waste water sub-system 120. The waste water sub-system 120 and the potable water sub-system 104 may be in fluid communication via the four-way rotary valve 102. For example, the waste water sub-system 120 and the potable water sub-system 104 may be in fluid communication via a four-way rotary cruciform valve 102. The potable water sub-system 104 may be configured to drain or empty into the waste water sub-system 120 via the four-way rotary valve 102 (e.g., the one or more four-way rotary cruciform valves 102) when the four-way rotary valve 102 is in a select operational configuration.

It is noted herein that the select operational configuration to fill the potable water sub-system 104 via the four-way rotary valve 102 may be different (e.g., is at least a first configuration) than the select operational configuration to drain or empty the potable water sub-system 104 into the waste water sub-system 120 via the four-way rotary valve 102 (e.g., is at least a second configuration).

The waste water sub-system 120 may include one or more drain lines 122. The one or more drain lines 122 may be in fluid communication with and/or proximate to one or more components in fluid communication with and/or proximate to the waste water sub-system 120. For example, the one or more components in fluid communication with and/or proximate to the waste water sub-system 120 may include, but are not limited to, one or more galley inserts or installations 136 (e.g., beverage makers, chillers, refrigerators, freezers, ovens, or the like), one or more drip trays of the one or more galley inserts or installations 136, or the like.

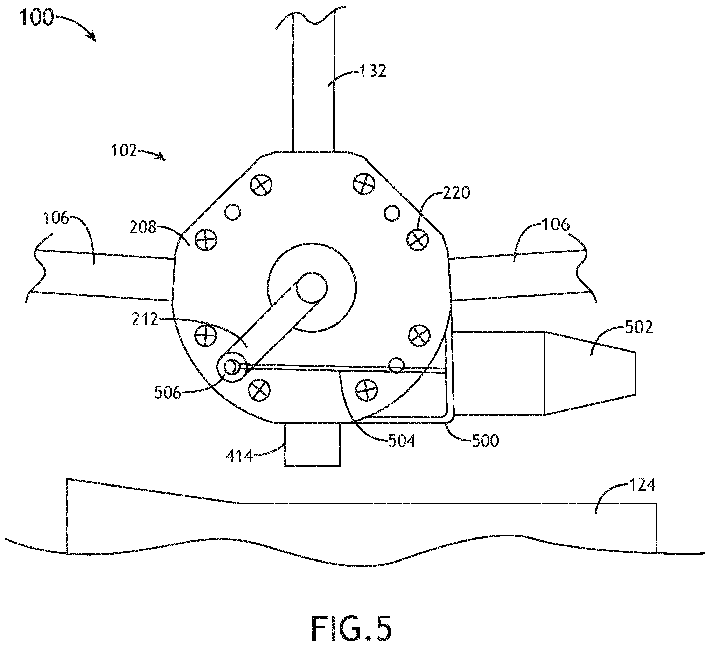

The waste water sub-system 120 may include one or more waste water sumps 124. The one or more waste water sumps 124 may indirectly collect waste water, where at least some of the one or more drain lines 122, one or more drip trays, chiller condensate, or the like may drain into the one or more waste water sumps 124. It is noted herein, however, that at least some of the one or more components (e.g., the one or more drip trays, chiller condensate, or the like) in fluid communication with and/or proximate to the waste water sub-system 120 may drain directly into the one or more waste water sumps 124. For example, the four-way rotary valve 102 may drain or empty directly into the one or more waste water sumps 124 (e.g., via a drain port 414, as illustrated in FIG. 5) when the four-way rotary valve 102 is in a select operational configuration. For instance, the system 100 may be configured to have a minimum one-inch (1") gap between the drain port 414 and an adjacent waste water sump 124.

The waste water sub-system 120 may include one or more sinks 126. The one or more faucets 110 may be positioned above and flow into the one or more sinks 126. It is noted herein, however, that the one or more sinks 126 may indirectly collect waste water, where at least some of the one or drain lines 122 and/or the one or more waste water sumps 124 may drain into the one or more sinks 126.

At least some components of the waste water sub-system 120 (e.g., the one or more drain lines 122, the one or more waste water sumps 124, the one or more sinks 126, or the like) may be in fluid communication with one or more main filter lines 132. For example, the one or more waste water sumps 124 may be fitted with mesh screens to prevent blockage of the one or more main filter lines 132. For instance, the mesh screens may be recessed within the one or more waste water sumps 124. At least some components of the waste water sub-system 120 (e.g., the one or more drain lines 122, the one or more waste water sumps 124, the one or more sinks 126, or the like) may be configured to prevent waste water backflow into the waste water sub-system 120.

The one or more main filter lines 132 may be in fluid communication with one or more compact drain strainers 130, where the one or more compact drain strainers 130 may be configured to at least one of filter the waste water and/or act as an anti-backflow device into the waste water sub-system 120 and/or the potable water sub-system 104 (e.g., through the four-way rotary valve 102). For example, at least some components of the waste water sub-system 120 (e.g., the one or more drain lines 122, the one or more waste water sumps 124, the one or more sinks 126, or the like) may be in fluid communication with the one or more compact drain strainers 130 via the one or more main filter lines 132 (e.g., are indirectly in fluid communication with the one or more compact drain strainers 130). It is noted herein, however, that at least some components of the waste water sub-system 120 (e.g., the one or more drain lines 122, the one or more waste water sumps 124, the one or more sinks 126, or the like) may be directly in fluid communication with the one or more compact drain strainers 130.

The aircraft galley plumbing system 100 may include one or more potable water filter lines 132 within the potable water sub-system 104. The one or more potable water filter lines 132 may be in fluid communication with at least one of the one or more potable water supply lines 106, the one or more potable water filters 108, the one or more potable water source lines 118, or other components of the potable water sub-system 104. For instance, the potable water sub-system 104 may include a dedicated filter line 132 in fluid communication with the one or more potable water filters 108, such that the one or more potable water filters 108 may be configured to empty into the waste water sub-system 120 via the dedicated filter line 132. In addition, the potable water sub-system 102 may include a dedicated filter line 132 in fluid communication, such that the potable water sub-system 102 may be configured to empty into the waste water sub-system 120 via the dedicated filter line 132.

The one or more potable water filter lines 132 may be in fluid communication with the four-way rotary valve 102. For example, the one or more potable water filter lines 132 may be closed during operation of the aircraft (e.g., aircraft 604, as illustrated in FIG. 6) and/or components within the aircraft galley (e.g., the aircraft galley 602, as illustrated in FIG. 6), and may drain through the four-way rotary valve 102 when operation of the aircraft and/or components within the aircraft galley is completed (e.g., at an end of a flight).

It is noted herein that potable water exposed to air may be disposed of via the waste water sub-system 120, while water unexposed to air that remains within the potable water sub-system 104 (e.g., including, but not limited to, within the one or more potable water supply lines 106, the one or more potable water filters 108, or the like) may be returned to the one or more potable water sources 116.

The aircraft galley plumbing system 100 may include and/or be coupled proximate to one or more service walls 134. It is noted herein the components of the potable water sub-system 104, the components of the waste water sub-system 120, and the one or more service walls 134 may be manufactured or fabricated together and installed as a single aircraft galley plumbing unit within the aircraft galley (e.g., the aircraft galley 602, as illustrated in FIG. 6) of the aircraft (e.g., aircraft 604, as illustrated in FIG. 6). For example, the single aircraft galley plumbing unit may include all plumbing sub-system components (e.g., for both potable water and waste water), electrical sub-system components, and/or air sub-system components necessary for installation and operation of the aircraft galley plumbing system 100 within the aircraft galley of the aircraft.

It is noted herein that the aircraft galley plumbing system 100 may incorporate a minimum drain angle of three degrees (3°) from horizontal as set forth in rules, regulations, and statutes prescribed by or otherwise related to the Federal Aviation Administration (FAA). In addition, it is noted herein the aircraft galley plumbing system 100 may not include any water traps. Further, it is noted herein the aircraft galley plumbing system 100 may be configured to drain or empty components including, but not limited to, the potable water filter 108, potable water supply lines 106, or other components of the potable water sub-system 104 to the waste water sub-system 120 via the four-way rotary valve 102 when the four-way rotary valve 102 is in a select operational configuration.

In this regard, the aircraft galley plumbing system 100 may be in a configuration that is simpler than known designs, improving upon the known designs by using a potable water distribution sub-system (e.g., the potable water sub-system 104) to both selectively fill and/or drain components of the aircraft galley plumbing system 100, which may result in a loss of water pressure within the select components, while maintaining water pressure within other components of the aircraft galley plumbing system 100.

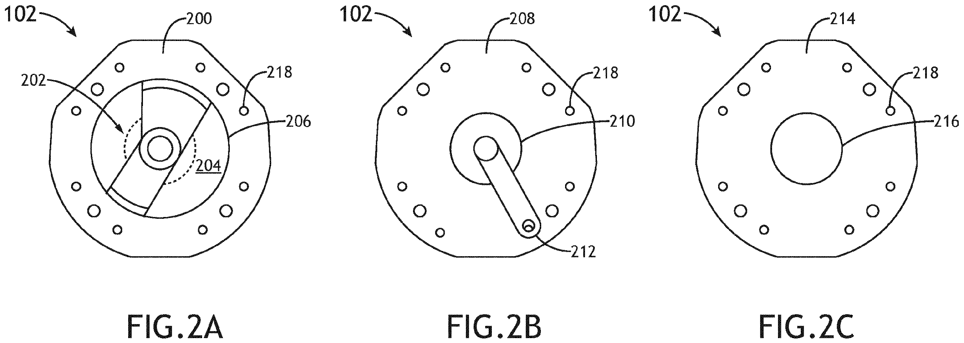

FIGS. 2A-5 generally illustrate the four-way rotary valve 102 of the aircraft galley plumbing system 100, in accordance with one or more embodiments of the present disclosure.

FIGS. 2A-2C generally illustrate the four-way rotary valve 102 of the aircraft galley plumbing system 100, in accordance with one or more embodiments of the present disclosure. It is noted herein that FIGS. 2A-2C each illustrate a particular view of a face of the four-way rotary valve 102.

The four-way rotary valve 102 may include a valve body 200. Subs-systems of the aircraft galley plumbing system 100 may be configured to be filled with potable water and/or drained via the valve body 200. For example, the one or more potable water supply lines 106 of the potable water sub-system (or manifold) 104 may be filled and/or drained depending on a particular operational configuration of the four-way rotary valve 102. By way of another example, the one or more potable water filters 108 may be filled and/or drained (e.g., via the one or more potable water filter lines 132) depending on a particular operational configuration of the four-way rotary valve 102.

The four-way rotary valve 102 may include a rotor 202. The rotor 202 may be housed within a cavity 204 defined by one or more interior surfaces 206 of the valve body 200. One or more seals may be coupled to the rotor 202.

The four-way rotary valve 102 may include a front valve cover 208. One or more seals may be positioned between the front valve cover 208 and the valve body 200. The front valve cover 208 may include an opening 210 to the cavity 204. An external lever 212 may be coupled to the rotor 202 via the opening 210 within the front valve cover 208 and configured to operate the rotor 202 (e.g., cause a rotation from a first position to a second position, hold the rotor in a particular position, or the like). For example, the external lever 212 may be coupled to a portion of the rotor 202 extruding through the opening 210. By way of another example, a portion of the external lever 212 may pass through the opening 210 and couple to the rotor 202. The front valve cover 208 may be removable, to allow the interior components (e.g., the rotor 202, seals within the valve body 200, or the like) and/or compartments (e.g., the cavity 204 defined by the one or more interior surfaces 206 of the valve body 200) of the four-way rotary valve 102 to be serviced. It is noted herein, however, that the axle of the rotor 202 may be directly driven via electrical or mechanical means, such that the external lever 212 is not required.

The four-way rotary valve 102 may include a rear valve cover 214. One or more seals may be positioned between the rear valve cover 214 and the valve body 200. The rear valve cover 214 may include an opening 216 to the cavity 204.

One or more of the valve body 200, the front valve cover 208, and/or the rear valve cover 214 may include coupling one or more coupling holes 218. For example, a fastener 220 (e.g., as illustrated in FIG. 5) may be passed through the one or more coupling holes 218 to couple the one or more of the valve body 200, the front valve cover 208, and/or the rear valve cover 214 together. For instance, at least some of the one or more coupling holes 218 may be threaded (e.g., be configured to receive a threaded fastener 220). In addition, at least some of the one or more coupling holes 218 may be un-threaded (e.g., be configured to receive a smooth-bore fastener 220). Further, at least some of the one or more coupling holes 218 may be tolerance for an interference fit between the fastener 220 and the one or more of the valve body 200, the front valve cover 208, and/or the rear valve cover 214.

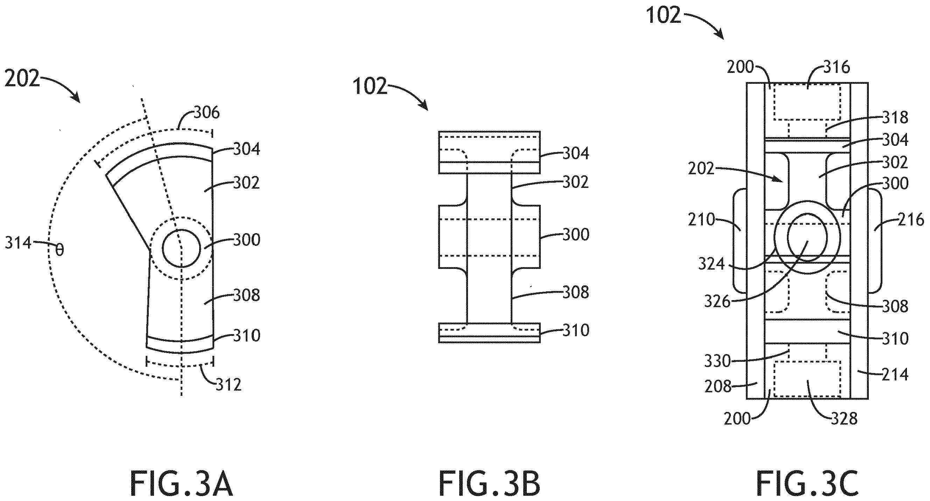

At least some of the one or more seals within the four-way rotary valve 102 (e.g., the one or more seals coupled to the rotor 202, the one or more seals installed within the one or more valve ports (e.g., a water filter drain valve port 316, a first manifold valve port 320, a second manifold valve port 324, and/or a drainage discharge valve port 328, as illustrated in FIGS. 3C-4D), the one or more seals between the front valve cover 208 and the valve body 200, and/or the one or more seals between the rear valve cover 214 and the valve body 200) may be replaceable.

At least some of the one or more seals within the four-way rotary valve 102 (e.g., the one or more seals coupled to the rotor 202, the one or more seals installed within the one or more valve ports (e.g., the water filter drain valve port 316, the first manifold valve port 320, the second manifold valve port 324, and/or the drainage discharge valve port 328, as illustrated in FIGS. 3C-4D), the one or more seals between the front valve cover 208 and the valve body 200, and/or the one or more seals between the rear valve cover 214 and the valve body 200) may be fabricated from any material known in the art used to fabricate O-ring seals. For example, at least some of the one or more seals may include, but are not limited to, a polytetrafluoroethylene (PTFE) seal. By way of another example, at least some of the one or more seals may be a rubber seal including, but not limited to, a fluoropolymer elastomer seal.

FIGS. 3A-3C generally illustrate the four-way rotary valve 102 of the aircraft galley plumbing system 100, in accordance with one or more embodiments of the present disclosure. It is noted herein that FIGS. 3A-3C each illustrate a particular view of a face of the four-way rotary valve 102.

The four-way rotary valve 102 may include a center axle 300. The center axle 300 may extrude through at least one of the opening 210 within the front valve cover 208 and/or the opening 216 within the rear valve cover 214.

The four-way rotary valve 102 may include one or more arms to which one or more blades having are coupled, where each blade has a select arc length. For example, the four-way rotary valve 102 include a first arm 302 coupled to the axle 300. For instance, the first arm 302 may include a blade 304, where a surface of the blade 304 in proximity to an interior surface 206 of the valve body 200 may have an arc length 306. By way of another example, the four-way rotary valve 102 may include a second arm 308 coupled to the axle 300. For instance, the second arm 308 may include a blade 310, where a surface of the blade 310 in proximity to an interior surface 206 of the valve body 200 may have an arc length 312. The arc length 306 may be longer than the arc length 312.

The first arm 302 and the second arm 308 may be positioned around and coupled to the axle 300 at an offset angle 314, such that the first arm 302 and the second arm 308 are not at a straight angle (e.g., 180 degrees (180°)) apart. It is noted herein that the offset angle 314 and the difference in length between the arc length 306 and the arc length 312 may be dependent on one another, such that an increase in one value (e.g., the difference in length) may increase or decrease the other value (e.g., the offset angle 314).

The valve body 200 may include one or more valve ports and one or more valve channels, where a particular valve port is in fluid communication with the cavity 204 via a particular valve channel.

For example, the one or more valve ports may include, but are not limited to, a water filter drain valve port 316 in fluid communication with the cavity 204 via a water filter drain valve channel 318 (e.g., as also illustrated in FIGS. 3C-4D). For instance, the water filter drain valve port 316 may be in fluid communication with the one or more water filters 108 via the one or more potable water filter lines 132 (e.g., as illustrated in FIG. 5).

By way of another example, the one or more valve ports may include, but are not limited to, a first manifold valve port 320 in fluid communication with the cavity 204 via a first manifold valve channel 322 (e.g., as illustrated in FIGS. 3C-4D). For instance, the first manifold valve port 320 may be in fluid communication with at least some of the one or more potable water supply lines 106 of the potable water sub-system 104 (e.g., as illustrated in FIG. 5).

By way of another example, the one or more valve ports may include, but are not limited to, a second manifold valve port 324 in fluid communication with the cavity 204 via a second manifold valve channel 326 (e.g., as also illustrated in FIGS. 3C-4D). For instance, the second manifold valve port 324 may be in fluid communication with at least some of the one or more potable water supply lines 106 of the potable water sub-system 104 (e.g., as illustrated in FIG. 5).

By way of another example, the one or more valve ports may include, but are not limited to, a drainage discharge valve port 328 in fluid communication with the cavity 204 via a drainage discharge valve channel 330 (e.g., as also illustrated in FIGS. 3C-4D). For instance, the first manifold valve port 320 may be in fluid communication with the drain port 414 (e.g., as illustrated in FIG. 5). It is noted herein that the drain port 414 may be considered a component of the waste-water sub-system 120.

Although embodiments of the present disclosure are directed to the one or more valve ports being in fluid communication with the cavity 204 via respective valve channels, it is noted herein that at least some of the one or more valve ports may be in direct fluid communication with the cavity 204, such that the respective valve channels are not required. For example, at least some of the water filter drain valve port 316, the first manifold valve port 320, the second manifold valve port 324, and/or the drainage discharge valve port 328 may be in direct fluid communication with the cavity 204. Therefore, the above description should not be interpreted as a limitation on the present disclosure but merely an illustration.

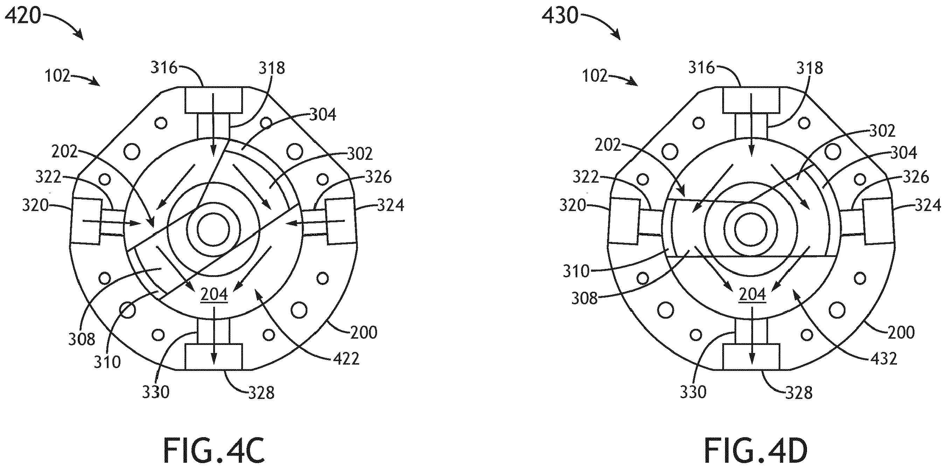

The blade 304 and/or the blade 310 may be designed or arranged to cover at least one of the one or more valve ports (e.g., the water filter drain valve port 316, the first manifold valve port 320, the second manifold valve port 324, and/or the drainage discharge valve port 328) when the four-way rotary valve 102 is in a particular operational configuration. It is noted herein that neither the arc length 306 of the blade 304 nor the arc length 312 of the blade 310 may be greater than the arc length of the interior surface 206 of the valve body 200 between adjacent valve channels within the valve body 200. For example, as illustrated in FIG. 4C, the blade 304 has an arc length (e.g., arc length 306, although not illustrated in FIG. 4C) less than the arc length of the interior surface 206 of the valve body 200 between the water filter drain valve channel 318 and the second manifold valve channel 326.

One or more components of the four-way rotary valve 102 may be fabricated from any metal or plastic known in the art. For example, the metal and/or the plastic may be approved by the United States Food and Drug Administration (U.S. FDA). It is noted herein that the four-way rotary valve 102 may include both components fabricated from a metal and components fabricated from a plastic.

It is noted herein that the one or more valve ports (e.g., the water filter drain valve port 316, the first manifold valve port 320, the second manifold valve port 324, and/or the drainage discharge valve port 328) and/or the corresponding valve channels (e.g., the water filter drain valve channel 318, the first manifold valve channel 322, the second manifold valve channel 326, and/or the drainage discharge valve channel 330) the may incorporate a minimum drain angle of five degrees (5°) from horizontal as set forth in rules, regulations, and statutes prescribed by or otherwise related to the Federal Aviation Administration (FAA).

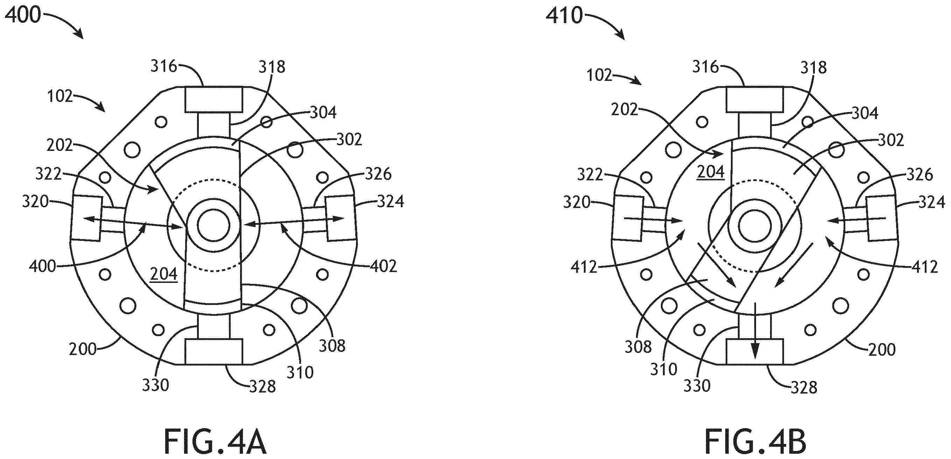

FIGS. 4A-4D generally illustrate the four-way rotary valve 102 of the aircraft galley plumbing system 100, in accordance with one or more embodiments of the present disclosure. It is noted herein that FIGS. 4A-4D each illustrate a particular view of a face of the four-way rotary valve 102 in a positive z (+z) direction.

Each of the one or more valve ports may be configured in an open position or a closed position. A particular combination of open positions and/or closed positions of the one or more valve ports may allow for a particular operational configuration (e.g., a mode of operation) of the four-way rotary valve 102 to be selected. Rotary action may be employed to position the rotor 202 in any of one or more positions to select a particular operational configuration. For example, the rotor 202 may be positioned in one of four positions. Each combination of open positions and/or closed positions of the one or more valve ports may be configured to direct fluid flow into at least one of the potable water sub-system of the aircraft galley plumbing system or the waste water sub-system of the aircraft galley plumbing system.

As illustrated in FIG. 4A, the rotor 202 may be in a fill position when the four-way rotary valve 102 is in a first operational configuration. In the fill position, the water filter drain valve port 316 and the drainage discharge valve port 328 may be closed, while the first manifold valve port 320 and the second manifold valve port 324 may be open. In this first operational configuration, the one or more potable water supply lines 106 (e.g., as illustrated in FIG. 5) of the potable water sub-system 104 may be filled. For example, the four-way rotary valve 102 may be utilized to selectively fill any of the one or more potable supply lines 106 and/or one or more galley inserts 136 in fluid communication with the one or more potable water supply lines 106 (e.g., as illustrated in FIG. 1) while one or more components of the potable water sub-system 104 or the waste water sub-system 120 remain pressurized.

As illustrated in FIG. 4B, the rotor 202 may be in a manifold drain position when the four-way rotary valve 102 is in a second operational configuration. In the manifold drain position, the water filter drain valve port 316 may be closed, while the first manifold valve port 320, the second manifold valve port 324, and the drainage discharge valve port 328 may be open. In this second operational configuration, the one or more potable water supply lines 106 (e.g., as illustrated in FIG. 5) of the potable water sub-system 104 may be drained into a waste water sump 124 via the drain port 414 of the waste water sub-system 120 (e.g., as illustrated in FIG. 5) through the valve body 200 of the four-way rotary valve 102. For example, the four-way rotary valve 102 may be utilized to selectively drain any of the one or more potable supply lines 106 and/or one or more galley inserts 136 in fluid communication with the one or more potable water supply lines 106 (e.g., as illustrated in FIG. 1) while one or more components of the potable water sub-system 104 or the waste water sub-system 120 remain pressurized.

As illustrated in FIG. 4C, the rotor 202 may be in a full drain position when the four-way rotary valve 102 is in a third operational configuration. In the full drain position, the water filter drain valve port 316, the first manifold valve port 320, the second manifold valve port 324, and the drainage discharge valve port 328 may be open. In this third operational configuration, the one or more potable water supply lines 106 (e.g., as illustrated in FIG. 5) and the one or more water filters 108 (e.g., via the one or more potable water filter lines 132, as illustrated in FIG. 5) of the potable water sub-system 104 may be drained into a waste water sump 124 via the drain port 414 of the waste water sub-system 120 (e.g., as illustrated in FIG. 5) through the valve body 200 of the four-way rotary valve 102. For example, the four-way rotary valve 102 may be utilized to selectively fill and/or drain any of the one or more potable supply lines 106, galley inserts 136 in fluid communication with the one or more potable water supply lines 106, the one or more filters 108, and/or the one or more potable water filter lines 132 (e.g., as illustrated in FIG. 1) while one or more components of the potable water sub-system 104 or the waste water sub-system 120 remain pressurized.

As illustrated in FIG. 4D, the rotor 202 may be in a water filter drain position when the four-way rotary valve 102 is in a fourth operational configuration. In the water filter drain position, the first manifold valve port 320 and the second manifold valve port 324 may be closed, while the water filter drain valve port 316 and the drainage discharge valve port 328 may be open. In this fourth operational configuration, the one or more water filters 108 (e.g., via the one or more potable water filter lines 132, as illustrated in FIG. 5) of the potable water sub-system 104 may be drained into a waste water sump 124 via the drain port 414 of the waste water sub-system 120 (e.g., as illustrated in FIG. 5) through the valve body 200 of the four-way rotary valve 102. For example, the four-way rotary valve 102 may be utilized to selectively drain any of the one or more filters 108 and/or the one or more potable water filter lines 132 (e.g., as illustrated in FIG. 1) while one or more components of the potable water sub-system 104 or the waste water sub-system 120 remain pressurized.

It is noted herein the potable water sub-system 104 and/or the waste water sub-system 106 may be flushed via the four-way rotary valve 102 when in any of the manifold drain position (e.g., as illustrated in FIG. 4B), the full drain position (e.g., as illustrated in FIG. 4C), and/or the water filter drain position (e.g., as illustrated in FIG. 4D) prior to commencing in-flight service operations as part of a start-up sequence for the aircraft (e.g., the aircraft 604, as illustrated in FIG. 6).

FIG. 5 illustrates the four-way rotary valve 102 of the aircraft galley plumbing system 100, in accordance with one or more embodiments of the present disclosure. It is noted herein that FIG. 5 illustrates a view of a face of the four-way rotary valve 102 in a positive z (+z) direction.

The four-way rotary valve 102 may be coupled to a bracket 500, where the bracket is coupled to another component of the system 100 (e.g., a service wall 134).

A motor 502 may be coupled to the bracket 500. For example, the motor 502 may include, but is not limited to, a servo motor, a stepper motor, or other motor configured to be controlled (e.g., driven) via a controller. The motor 502 may be coupled to the rotor 202 via a linkage 504 or piston arm 504. For example, the linkage 504 or piston arm 504 may be coupled to a point of attachment 506 of the external lever 212, where the external lever 212 is coupled to the rotor 202. It is noted herein the motor 502 may be configured to cause a rotation of the rotor 202 for precise operation and positioning of the rotor 202, thus allowing the four-way rotary valve 102 to correctly function.

Although embodiments of the present disclosure are directed to a motor 502 electrically-controlling the rotor 202, it is noted herein that the rotor 202 may be manually-controlled and/or mechanically-controlled. For example, the rotor 202 may be configured to be operated via simple tools in the event of a failure of the motor 502, a power supply driving the motor 502, and/or a controller controlling the motor 502. By way of another example, the rotor 202 may be configured to be operated via simple tools full-time. Therefore, the above description should not be interpreted as a limitation on the present disclosure but merely an illustration.

FIG. 6 illustrates a block diagram illustrating a system 600 including the aircraft galley plumbing system 100 with the four-way rotary valve 102, in accordance with one or more embodiments of the present disclosure.

The aircraft galley plumbing system 100 may be housed and/or installed within the aircraft galley 602 of the aircraft 604.

The aircraft galley plumbing system 100 may include one or more secondary valves 606 in addition to the four-way rotary valve 102. For example, the one or more secondary valves 606 may include, but are not limited to, one or more main water shut-off valves.

The one or more secondary valves 606 may be interspersed within the fluid flow of the potable water sub-system 104. For example, the one or more secondary valves 606 and the four-way rotary valve 102 may be interlinked, such that any opening and/or closing sequences within the potable water sub-system 104 may be synchronized to prevent continuous discharge of the aircraft potable water supply and/or to flush the aircraft potable water supply. By way of another example, the one or more secondary valves 606 and the four-way rotary valve 102 may be interlinked, such that any opening and/or closing sequences within the potable water sub-system 104 may be synchronized to act as a failsafe for the aircraft galley plumbing system 100.

The one or more secondary valves 606 may be interspersed within the fluid flow of the waste water sub-system 120. For example, the one or more secondary valves 606 and the four-way rotary valve 102 may be interlinked, such that any opening and/or closing sequences within the waste water sub-system 120 may be synchronized to prevent continuous discharge of the aircraft waste water supply and/or to flush the aircraft waste water supply. By way of another example, the one or more secondary valves 606 and the four-way rotary valve 102 may be interlinked, such that any opening and/or closing sequences within the waste water sub-system 120 may be synchronized to act as a failsafe for the aircraft galley plumbing system 100.

In this regard, the one or more secondary valves 606 and the four-way rotary valve 102 may be interlinked to ensure both cannot be opened simultaneously (e.g., which may result in an unintended draining of the aircraft galley plumbing system 100).

It is noted herein the one or more secondary valves 606 may be interspersed within the fluid flow of the either of the potable water sub-system 102 and the fluid flow of the waste water sub-system 120, or both of the potable water sub-system 102 and the fluid flow of the waste water sub-system 120.

The one or more secondary valves 606 and/or the four-way rotary valve 102 may be electrically-controlled. For example, the four-way rotary valve 102 may be coupled to the motor 502. By way of another example, the one or more secondary valves 606 may be coupled to one or more secondary motors 608. For instance, the one or more secondary motors 502 may include, but are not limited to, one or more servo motors, one or more stepper motors, or one or more other motors configured to be controlled via a controller. It is noted herein, however, that the four-way rotary valve 102 and/or the one or more secondary valves 606 may be manually-controlled and/or mechanically-controlled. For example, the four-way rotary valve 102 and/or the one or more secondary valves 606 may be controlled via a toggle, switch, cable assembly, or other mechanical operating mechanism.

The aircraft galley plumbing system 100 may include one or more sensors 610. For example, the one or more sensors 610 may be configured to record and transmit a position of the four-way rotary valve 102. By way of another example, the one or more sensors 610 may be configured to record and transmit a position of the one or more secondary valves 606.

The aircraft 604 may include one or more controllers 612. The one or more controllers 612 may be installed within the aircraft 604. The one or more controllers 612 may be installed within the aircraft galley 602 of the aircraft 604. A first set of one or more controllers 612 may be installed within the aircraft galley 602 and communicatively coupled to one or more components of the aircraft galley plumbing system 100, and a second set of one or more controllers 612 may be installed within the aircraft 604 and communicatively coupled to the first set of one or more controllers 612.

The one or more motors 502 and/or the one or more secondary motors 608 may be communicatively coupled to and configured to receive data from one or more controllers 612 within the aircraft 604. The one or more sensors 610 may be communicatively coupled to and configured to transmit data to the one or more controllers 612. For example, the one or more sensors 610 may be positioned and configured to monitor the potable water sub-system 104 (e.g., potable water levels, potable water fluid flow rate, or other metrics related to the operation of the potable water sub-system 104). By way of another example, the one or more sensors 610 may be positioned and configured to monitor the waste water sub-system 120 (e.g., waste water levels, waste water fluid flow rate, or other metrics related to the operation of the waste water sub-system 120).

The one or more controllers 612 may include at least one of one or more processors 614, memory 616 configured to store one or more sets of program instructions 618, and/or one or more communication interfaces 620.

The one or more processors 614 provides processing functionality for at least the one or more controllers 612 and may include any number of processors, micro-controllers, circuitry, field programmable gate array (FPGA) or other processing systems, and resident or external memory for storing data, executable code, and other information accessed or generated by the one or more controllers 612. The one or more processors 614 may execute one or more software programs (e.g., the one or more sets of program instructions 618) embodied in a non-transitory computer readable medium (e.g., the memory 616) that implement techniques described herein. The one or more processors 614 are not limited by the materials from which it is formed or the processing mechanisms employed therein and, as such, may be implemented via semiconductor(s) and/or transistors (e.g., using electronic integrated circuit (IC) components), and so forth.

The memory 616 may be an example of tangible, computer-readable storage medium that provides storage functionality to store various data and/or program code associated with operation of the one or more controllers 612 and/or one or more processors 614, such as software programs and/or code segments, or other data to instruct the one or more processors 614, and possibly other components of the one or more controllers 612, to perform the functionality described herein. Thus, the memory 616 may store data, such as a program of instructions for operating the one or more controllers 612, including its components (e.g., one or more processors 614, the one or more communication interfaces 620, or the like), and so forth. It should be noted that while a single memory 616 is described, a wide variety of types and combinations of memory (e.g., tangible, non-transitory memory) may be employed. The memory 616 may be integral with the one or more processors 614, may include stand-alone memory, or may be a combination of both. Some examples of the memory 616 may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The one or more communication interfaces 620 may be operatively configured to communicate with components of the one or more controllers 612. For example, the one or more communication interfaces 620 may be configured to retrieve data from the one or more processors 614 or other devices, transmit data for storage in the memory 616, retrieve data from storage in the memory 616, and so forth. The one or more communication interfaces 620 may also be communicatively coupled with the one or more processors 614 to facilitate data transfer between components of the one or more controllers 612 and the one or more processors 614. It should be noted that while the one or more communication interfaces 620 is described as a component of the one or more controllers 612, one or more components of the one or more communication interfaces 620 may be implemented as external components communicatively coupled to the one or more controllers 612 via a wired and/or wireless connection. The one or more controllers 612 may also include and/or connect to one or more input/output (I/O) devices. The one or more communication interfaces 620 may include and/or may be coupled to a transmitter, receiver, transceiver, physical connection interface, or any combination thereof.

The one or more communication interfaces 620 may be operatively configured to communicate with one or more data input devices. The one or more communication interfaces 620 may be operatively configured to communicate with components of one or more display devices. The one or more data input devices and the one or more display devices may be components of one or more user interfaces. The controller 612 and the one or more user interfaces may be separate components (e.g., have separate housings and/or separate chassis). It is noted herein, however, that the controller 612 and the one or more user interfaces may be components integrated in a single housing and/or on a single chassis.

The one or more controllers 612 may be configured to perform one or more process steps, as defined by the one or more sets of program instructions 618. For example, the one or more process steps may include the processes to operate the four-way rotary valve 102 (e.g., by causing a rotation of the rotor 202) to position the rotor 202 in any of one or more positions to select a particular operational configuration. By way of another example, the one or more process steps may include the processes to open and/or close the four-way rotary valve 102 and the one or more secondary valves 606 in a particular order (e.g., via driving the motor 502 and/or one or more secondary motors 608, respectively) to interlink the four-way rotary valve 102 and the one or more secondary valves 606 to prevent continuous discharge of the aircraft potable water supply and/or to flush the aircraft potable water supply.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as nonlimiting examples unless otherwise specified in the claims.

## Claims

1. A four-way rotary valve (102), comprising:
a valve body (200), comprising:
a cavity (204) defined by one or more interior surfaces of the valve body; and
a plurality of valve ports in fluid communication with the cavity, each valve port of the plurality of valve ports in fluid communication with a component of a potable water sub-system of an aircraft galley plumbing system or a component of a waste water sub-system of the aircraft galley plumbing system; and
a rotor (202) housed within the cavity, the rotor comprising:
an axle;
a plurality of arms, adjacent arms of the plurality of arms being coupled to the axle at a select offset angle; and
a plurality of blades, each blade of the plurality of blades coupled to an arm of the plurality of arms, each blade of the plurality of blades including a select arc length,
the rotor being positionable in a plurality of positions, each position of the plurality of positions being configured to direct fluid flow into at least one of the potable water sub-system of the aircraft galley plumbing system or the waste water sub-system of the aircraft galley plumbing system.

2. The four-way rotary valve of Claim 1, wherein the plurality of arms includes two arms, wherein the plurality of blades includes two blades, wherein each blade of the two blades is coupled to an arm of the two arms, wherein an arc length of a first blade of the two blades is longer than an arc length of a second blade of the two blades.

3. The four-way rotary valve of Claim 1, further comprising:
an external lever coupled to the rotor, wherein the external lever is configured to operate the rotor, wherein the external lever is configured to couple to the rotor via an opening in at least one of a front valve cover or a rear valve cover, and optionally further comprising:
a motor communicatively coupled to a controller, wherein the controller is configured to drive the motor, wherein the motor is configured to cause a rotation of the external lever.

4. The four-way rotary valve of any preceding Claim, wherein the plurality of valve ports include a water filter drain valve port, a first manifold valve port, a second manifold valve port, and a drainage discharge valve port.

5. The four-way rotary valve of Claim 4, wherein the plurality of positions include a fill position, wherein the water filter drain valve port and the drainage discharge valve port are closed, wherein the first manifold valve port and the second manifold valve port are open, wherein a plurality of potable water supply lines of the potable water sub-system is selectively filled via the first manifold valve port and the second manifold valve port while at least one additional component of the potable water sub-system or the waste water sub-system remains pressurized, or
wherein the plurality of positions include a manifold drain position, wherein the water filter drain valve port is closed, wherein the first manifold valve port, the second manifold valve port, and the drainage discharge valve port are open, wherein at least one of a plurality of potable water supply lines of the potable water sub-system or at least one galley insert in fluid communication with the plurality of potable water supply lines are selectively drained into a waste water sump via the first manifold valve port, the second manifold valve port, and the drainage discharge valve port while at least one additional component of the potable water sub-system or the waste water sub-system remains pressurized.

6. The four-way rotary valve of Claim 4, wherein the plurality of positions include a full drain position, wherein the water filter drain valve port, the first manifold valve port, the second manifold valve port, and the drainage discharge valve port are open, wherein at least one of a plurality of potable water supply lines, at least one galley insert in fluid communication with the plurality of potable water supply lines, a potable water filter of the potable water sub-system, or a plurality of potable water filter lines in fluid communication with the potable water filter are selectively drained into a waste water sump via the water filter drain valve port, the first manifold valve port, the second manifold valve port, and the drainage discharge valve port while at least one additional component of the potable water sub-system or the waste water sub-system remains pressurized, or wherein the plurality of positions include a water filter drain position, wherein the first manifold valve port and the second manifold valve port are closed, wherein the water filter drain valve port and the drainage discharge valve port are open, wherein at least one of a potable water filter of the potable water sub-system or a plurality of potable water filter lines in fluid communication with the potable water filter are selectively drained into a waste water sump via the water filter drain valve port and the drainage discharge valve port while at least one additional component of the potable water sub-system or the waste water sub-system remains pressurized.

7. The four-way rotary valve of Claim 4, the valve body further comprising:
a plurality of valve channels, wherein each valve channel of the plurality of valve channels is in fluid communication with a valve port of the plurality of valve ports, wherein each valve channel of the plurality of valve channels is in fluid communication with the cavity.

8. A four-way rotary valve, comprising:
a valve body, comprising:
a cavity defined by one or more interior surfaces of the valve body; and
a plurality of valve ports in fluid communication with the cavity, each valve port of the plurality of valve ports in fluid communication with a component of a potable water sub-system of an aircraft galley plumbing system or a component of a waste water sub-system of the aircraft galley plumbing system; and
a rotor housed within the cavity, the rotor comprising:
an axle;
two arms coupled to the axle at a select offset angle; and
two blades, each blade of the two blades coupled to an arm of the two arms, an arc length of a first blade of the two blades being longer than an arc length of a second blade of the two blades,
the rotor being positionable in a plurality of positions, each position of the plurality of positions being configured to direct fluid flow into at least one of the potable water sub-system of the aircraft galley plumbing system or the waste water sub-system of the aircraft galley plumbing system.

9. The four-way rotary valve of Claim 8, a position of the plurality of positions being configured to selectively fill the potable water sub-system while at least one additional component of the potable water sub-system or the waste water sub-system remains pressurized.

10. The four-way rotary valve of Claim 8 or 9, a position of the plurality of positions being configured to selectively drain a potable water filter of the potable water sub-system via the waste water sub-system potable water sub-system while at least one additional component of the potable water sub-system or the waste water sub-system remains pressurized.

11. The four-way rotary valve of any of Claims 8, 9 or 10, a position of the plurality of positions being configured to selectively drain at least one galley insert in fluid communication with a component of the potable water sub-system via the waste water sub-system potable water sub-system while at least one additional component of the potable water sub-system or the waste water sub-system remains pressurized.

12. An aircraft galley plumbing system, comprising:
a potable water sub-system;
a waste water sub-system; and
a four-way rotary valve, comprising:
a valve body, comprising:
a cavity defined by one or more interior surfaces of the valve body; and
a plurality of valve ports in fluid communication with the cavity, each valve port of the plurality of valve ports in fluid communication with a component of the potable water sub-system or a component of the waste water sub-system; and
a rotor housed within the cavity, the rotor comprising:
an axle;
a plurality of arms coupled to the axle; and
a plurality of blades, each blade of the plurality of blades coupled to an arm of the plurality of arms, each blade of the plurality of blades including a select arc length,
the rotor being positionable in a plurality of positions, each position of the plurality of positions being configured to direct fluid flow into at least one of the potable water sub-system or the waste water sub-system.

13. The aircraft galley plumbing system of 12, further comprising:
one or more secondary valves, wherein the four-way rotary valve and the one or more secondary valves are interlinked to synchronize at least one of an opening sequence or a closing sequence for the four-way rotary valve and the one or more secondary valves.

14. The aircraft galley plumbing system of Claim 12 or 13, wherein the potable water sub-system comprises:
a plurality of potable water supply lines, a potable water supply line of the plurality of potable water supply lines configured to provide potable water from a potable water source to at least one galley insert;
a potable water filter, wherein the potable water filter is in fluid communication with the potable water source via a potable water source line, wherein the potable water filter is in fluid communication with the four-way rotary valve via a dedicated filter line; and
a faucet, wherein the faucet is in fluid communication with a potable water supply line of the plurality of potable water supply lines via a faucet supply line, wherein at least some potable water supply lines of the plurality of potable water supply lines are arranged in a supply line loop configured to prevent backflow of potable water into the faucet supply line of the faucet, or further comprising:
a service wall, wherein one or more components of the potable water sub-system, one or more components of the waste water sub-system, and the four-way rotary valve are coupled to the service wall,
wherein the potable water sub-system, the waste water sub-system, the four-way rotary valve, and the service wall are configured to be installed as a single aircraft galley plumbing unit within an aircraft galley of an aircraft.

15. The aircraft galley plumbing system of Claim **Error! Reference source not found.12,** wherein the waste water sub-system comprises:
a plurality of drain lines, a drain line of the plurality of drain lines configured to receive waste water from at least one galley insert;
a plurality of waste water sumps, a waste water sump of the plurality of waste water sumps configured to receive waste water from a drain line of the plurality of drain lines; and
a main drain line in fluid communication with at least one of a drain line of the plurality of drain lines or a waste water sump of the plurality of waste water sumps,
wherein at least some of the plurality of drain lines, the plurality of waste water sumps, or the main drain line are configured to prevent waste water backflow into the waste water sub-system, and optionally
wherein the waste water sub-system further comprises:
a compact drain strainer configured to receive waste water from the main drain line, wherein the compact drain strainer is configured to at least one of filter waste water or prevent waste water backflow into the waste water sub-system.
